# EUROPÄISCHE PATENTSCHRIFT

(11) **EP 0 313 971 B1**
(45) Veröffentlichungstag und Bekanntmachung des Hinweises auf die Patenterteilung: **18.08.1993**
(21) Anmeldenummer: 88117362.9
(22) Anmeldetag: 19.10.1988
(51) Int. Cl.: A47K 1/08

(54) **Befestigungsvorrichtung an Beschlag- oder Ausstattungsteilen, insbesondere Ablagen**
Fastening device for outfit pieces, especially for racks
Dispositif de fixation pour pièces d'équipement, en particulier pour tablettes

(30) Priorität: 30.10.1987 DE 8714446 U
(43) Veröffentlichungstag der Anmeldung: 03.05.1989
(73) Patentinhaber: HEWI HEINRICH WILKE GMBH, D-34454 Arolsen (DE)
(72) Erfinder: Friedrichs, Bernd, D-3548 Arolsen (DE)
(74) Vertreter: Freiherr von Schorlemer, Reinfried, Dipl.-Phys.

(56) Entgegenhaltungen:
- DE-A- 3 105 185
- DE-A- 3 105 217
- DE-U- 1 860 509
- US-A- 3 108 664
- US-A- 3 922 048

## Beschreibung

Die Erfindung betrifft eine Befestigungsvorrichtung der im Oberbegriff des Anspruchs 1 definierten Gattung (siehe zum Beispiel DE-A-2 535 894).

Bekannte Befestigungsvorrichtungen dieser Art werden z.B. an Seifenschalen, Zahnglashaltern, Aschenbechern, Mehrzweckablagen od. dgl., aber auch an Türdrückern, Türschildern, Rosetten, Briefeinwurfschlitz-Abdeckungen od. dgl. insbesondere im Haushalts- und Sanitärbereich vielseitig verwendet. Sie weisen beispielsweise korrespondierende Hinterschneidungen (DE-OS'en 20 56 723 und 24 37 051) auf, die im aufgeschobenen Zustand des Oberteils eine Schnappverbindung zwischen diesem und dem Unterteil bilden. Derartige Befestigungsvorrichtungen sind weit verbreitet und daher bei ihrer Anwendung im öffentlichen Bereich, z.B. in Schulen, Schwimmbädern od. dgl., nur noch begrenzt diebstahlsicher. Entsprechendes gilt für Befestigungsvorrichtungen mit Stiftverbindungen.

Es sind daher auch bereits Befestigungsvorrichtungen der eingangs bezeichneten Gattung bekannt geworden, deren Verbindungsorgane in den Unterteilen gelagerte Federbolzen (DE-OS'en 31 02 191, 31 05 216 und 31 05 217) oder an den Ober- oder Unterteilen angebrachte federnde Zungen (DE-OS 25 35 894) aufweisen. Diese Federbolzen oder Zungen rasten im aufgeschobenen Zustand in eine Aussparung, hinter einem Vorsprung od. dgl. des jeweils anderen Teils ein und können durch eine Öffnung im Oberteil hindurch mit einem Finger oder Werkzeug aus der Raststellung herausgedrückt werden, wenn das Oberteil vom Unterteil abgezogen werden soll.

Dabei ist häufig zusätzlich eine Dienstahlsicherung derart vorgesehen, daß sich die Federbolzen oder federnden Zungen nur in einer ganz bestimmten, vorher herzustellenden Stellung und/oder vorzugsweise nur durch eine sehr kleine Öffnung hindurch ausrasten lassen. Zum Abziehen des Oberteils ist daher entweder eine genaue Kenntnis der Diebstahlsicherung und/oder ein spezielles Werkzeug erforderlich.

Auch Befestigungsvorrichtungen der zuletzt genannten Art sind nicht immer ausreichend dienstahlsicher, weil die zum Lösen der Verbindung erforderlichen Öffnungen zwar versteckt angebracht, aber nicht völlig unsichtbar gemacht werden können. Abgesehen davon ermöglichen diese Öffnungen das Eindringen von Schmutz, Seife, Feuchtigkeit od. dgl., was insbesondere bei Anwendung der Befestigungsvorrichtung in Naßräumen vermieden werden muß, um Korrosionen, Schimmelpilzbildung od. dgl. in den zwischen den Unterteilen und Oberteilen befindlichen Hohlräumen zu vermeiden bzw. die Anforderungen an die Reinigung und Sauberhaltung der Unter- und Oberteile auf ein Mindestmaß zu reduzieren. Entsprechendes gilt fur Stifte aufweisende Befestigungsvorrichtungen, die sich erst nach dem Aufheben einer Verriegelung durch eine im Oberteil ausgebildete Öffnung hindurch lösen lassen (DE-OS 25 35 894).

Entsprechende Probleme würden sich bei dem Versuch ergeben, eine bei Waschmaschinen bekannte Diebstahlsicherung (US-A-3 922 048) auf die eingangs bezeichnete Befestigungsvorrichtung an Beschlag- oder Ausstattungsteilen zu übertragen. Bei dieser Diebstahlsicherung sind nämlich zwar versteckt und unsichtbar angebrachte Verbindungsorgane vorgesehen, doch können diese nur dadurch zur Herstellung des getrennten Zustands zugänglich gemacht werden, daß eine am Deckel der Waschmaschine vorgesehene Münzbox mit einem schwenkbaren Seitenteil versehen wird, das mittels eines Schlüssels versperrt werden kann Abgesehen davon, daß eine solche Lösung bei einfachen Beschlag- und Ausstattungsteilen sehr kompliziert und aufwendig wäre, regen die erkennbar schwenkbare Lagerung des Seitenteils und dessen Schlüsselloch geradezu zu unerwünschten Manipulationen verschiedener Art an.

Der Erfindung liegt die Aufgabe zugrunde, die eingangs bezeichnete Befestigungsvorrichtung so auszubilden, daß trotz Vorhandenseins einer speziellen Diebstahlsicherung 34 keinerlei Öffnungen im Oberteil vorgesehen werden brauchen.

Zur Lösung dieser Aufgabe dienen die kennzeichnenden Merkmale des Anspruchs 1.

Die Erfindung bringt den Vorteil mit sich, daß durch die zweiten Verbindungsorgane völlig neue Wege zur Diebstahlsicherung eröffnet werden. Selbst wenn es gelingt, die durch die ersten Verbindungsorgane hergestellte Verbindung zu lösen, ist dadurch noch nicht ein völliges Abstreifen des Oberteils vom Unterteil möglich. Hierzu wäre vielmehr auch ein Lösen der durch die zweiten Verbindungsorgane hergestellten Verbindung, vorzugsweise mit einem zweiten Werkzeug erforderlich, so daß eine unbefugte Demontage des Oberteils und dann des Unterteils zumindest erheblich erschwert wird. Außerdem ist keine Öffnung im Oberteil erforderlich, um das Oberteil vom Unterteil abziehen zu können, so daß das Oberteil mit einer völlig geschlossenen, glatten und leicht sauber zu haltenden Oberfläche versehen werden kann und das Eindringen von Schmutz, Feuchtigkeit od. dgl. in den vom Oberteil umgrenzten Raum vermieden wird.

Weitere vorteilhafte Merkmale der Erfindung ergeben sich aus den Unteransprüchen.

Die Erfindung wird nachfolgende in Verbindung mit der beiliegenden Zeichnung an Ausführungsbeispielen näher erläutert. Es zeigen:
Fig. 1 die Unteransicht eines Unterteils einer Ablage mit einer erfindungsgemäßen Befestigungsvorrichtung;
Fig. 2 einen Schnitt längs der Linie II-II der Fig. 1;
Fig. 3 eine Seitenansicht des Unterteils nach Fig. 1;
Fig. 4 die Draufsicht des Unterteils nach Fig. 1;
Fig. 5 einen vergrößerten Ausschnitt des Unterteils nach Fig. 1 mit einer eingelegten Feder;
Fig. 6 eine teilweise geschnittene Unteransicht eines für das Unterteil nach Fig. 1 bis 5 bestimmten Oberteils;
Fig. 7 eine teilweise geschnittene Draufsicht auf das Oberteil nach Fig. 6;
Fig. 8 die Einzelheit Z der Fig. 7 in vergrößertem Maßstab;
Fig. 9 einen Schnitt längs der Linie IX-IX der Fig. 7;
Fig. 10 bis 12 in vergrößerter Darstellung jeweils die Draufsicht, den Schnitt längs der Linie XI-XI der Fig. 10 und die Unteransicht eines Stopfens für das Unterteil nach Fig. 1 bis 5;
Fig. 13 und 14 vergrößerte Schnitte entsprechend Fig. 2, 7 und 11 durch die gesamte Ablage im montierten Zustand in zwei unterschiedlichen Stellungen;
Fig. 15 und 16 geschnittene Vorderansichten der Ablage in zwei unterschiedlichen Stellungen entsprechend Fig. 13 und 14;
Fig. 17 die Unteransicht einer zweiten Ausführungsform des Unterteils;
Fig. 18 und 19 Schnitte längs der Linien XVIII-XVIII und XIX-XIX der Fig. 17;
Fig. 20 und 21 je eine Seitenansicht bzw. Draufsicht des Unterteils nach Fig. 17;
Fig. 22 bis 25 jeweils die Unteransicht, den Schnitt längs der Linie XXIII-XXIII der Fig. 22, eine Seitenansicht und die Draufsicht einer Abdeckplatte für das Unterteil nach Fig. 17 bis 21;
Fig. 26 und 27 die Unteransicht und den Schnitt längs der Linie XXVII-XXVII der Fig. 26 für das Unterteil und die Abdeckplatte nach Fig. 17 bis 25 im zusammengefügten Zustand.

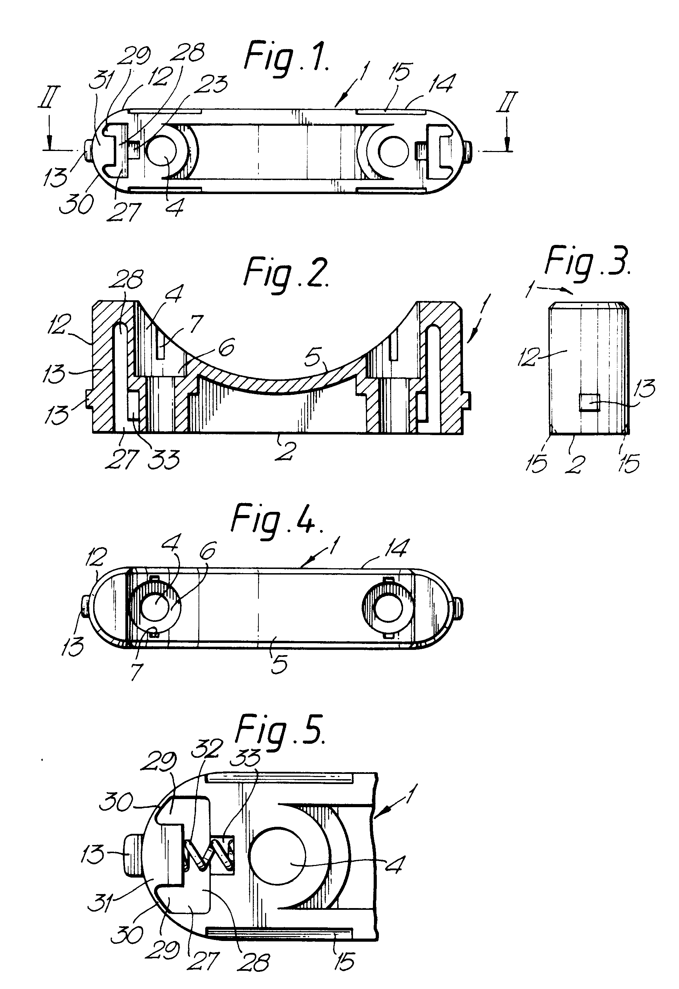

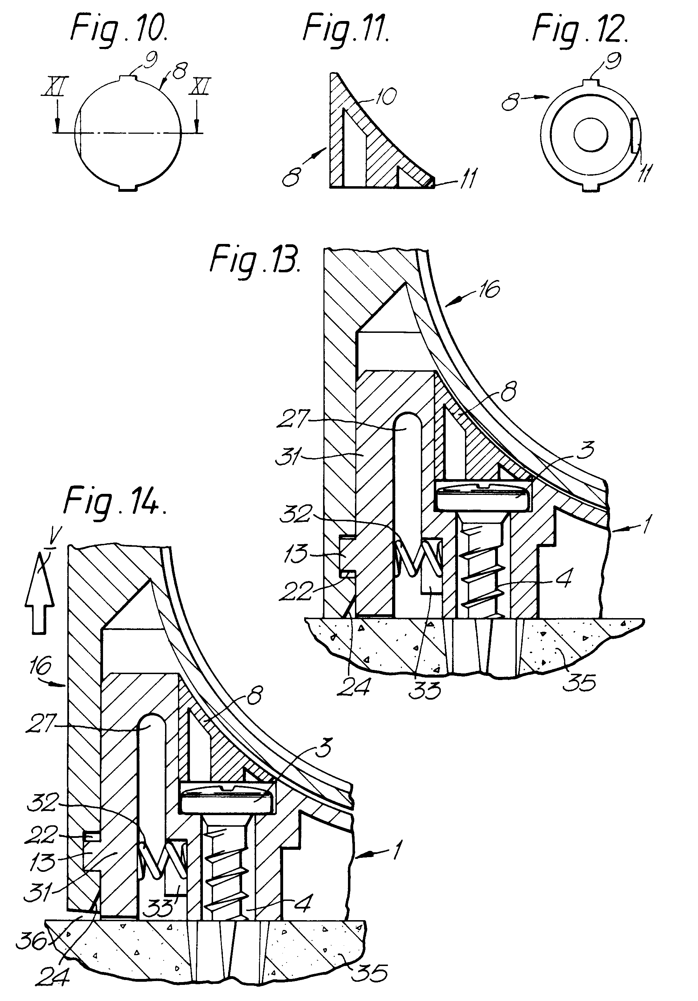

Nach Fig. 1 bis 5 enthält ein Unterteil 1 einer als Halter für einen Zahnputzbecher ausgebildeten Ablage eine im wesentlichen ebene Anlagefläche 2 zum planen Anlegen an eine Wand od. dgl., an der es mittels Befestigungsschrauben 3 (Fig. 13,14) befestigt wird, die durch Schraublöcher 4 ragen. Die Schraublöcher 4 erstrecken sich von der Anlagefläche 2 bis zur entgegengesetzten, im speziellen Fall konkav gewölbten Oberfläche 5 des Unterteils 1 und weisen in einem mittleren Abschnitt je eine Querschnittsverengung auf, um Schultern 6 zur versenkten Auflage der Köpfe der Befestigungsschrauben 3 zu schaffen. Außerdem weisen die die Schraublöcher 4 begrenzenden Wandabschnitte an ihren an die Oberfläche 5 grenzenden Enden radiale, schlitzförmige Ausnehmungen 7 auf.

In die Schraublöcher können Stopfen 8 (Fig. 10 bis 12) eingedrückt werden, die einen dem Querschnitt der Schraublöcher 4 entsprechenden Querschnitt aufweisen und mit radialen, zum drehfesten Einführen in die Ausnehmungen 7 bestimmten Vorsprüngen 9 versehen sind. An ihrem einen Ende sind die Stopfen 8 jeweils mit einer konkav gewölbten, der Oberfläche 5 des Unterteils 1 entsprechenden Oberfläche 10 versehen. Dabei ist die Länge der Ausnehmungen 7 und Vorsprüngen 9 so lang, daß die Oberflächen 10 der Stopfen 8 stufenfreie, nur durch eine feine Stoßfuge getrennte Fortsetzungen der Oberfläche 5 des Unterteils 1 bilden, wenn die Vorsprünge 9 an die in Fig. 2 unteren Enden der Ausnehmungen 7 anstoßen, und daß gleichzeitig zwischen den Stopfen 8 und den Schultern 6 noch ausreichend Platz für die Köpfe der Befestigungsschrauben ist (Fig. 13,14). Nach dem Anbringen der Stopfen 8 besitzt das Unterteil 1 daher eine glatte, durch die Oberflächen 10 geschlossene Oberfläche 5. An einem unteren Rand des Stopfens 8 kann jeweils eine kleine Aussparung 11 mit einem schräg zur Oberfläche 10 verlaufenden Wandabschnitt ausgebildet sein, die eine Demontage des Stopfens 8 nach dem Einführen in eines der Schraublöcher 4 ermöglicht.

Das Unterteil 1 weist einen im wesentlichen flachovalen Außenquerschnitt auf und ist an seinen kurzen, gekrümmten Stirnflächen 12 mit je einem Verbindungsorgan in Form eines radial vorstehenden Ansatzes 13 versehen, der etwas oberhalb der Anlagefläche 2 endet. An seinen langen, geraden Seitenflächen 14 weist das Unterteil 1 schließlich wenigstens je ein Verbindungsorgan in Form einer Hinterschneidung 15 (Fig. 1 und 3) bzw. eines nach außen ragenden Vorsprungs od. dgl. auf, wobei diese in Fig. 3 gestrichelt angedeutete Hinterschneidung 15 zweckmäßig an die Anlagefläche 2 grenzt oder in deren Nähe endet.

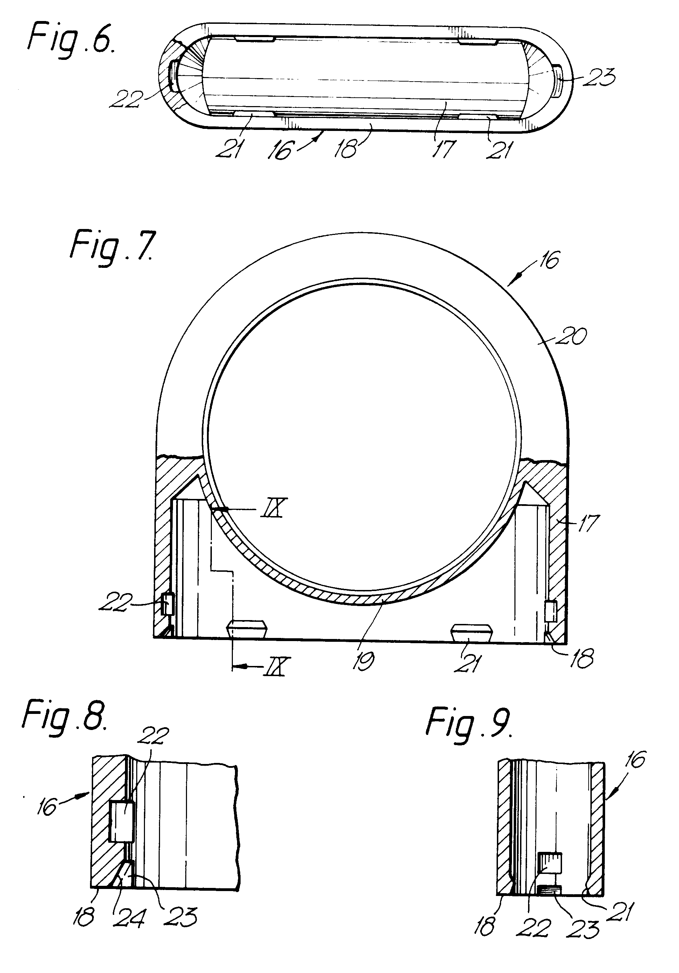

Gemäß Fig. 6 bis 9 weist ein an das Unterteil 1 angepaßtes Oberteil 16 einen kappenartigen Halteabschnitt 17 mit einem dem Außenquerschnitt des Unterteils 1 entsprechenden, flachovalen Innenquerschnitt auf. Der Halteabschnitt 17 kann auf das Unterteil 1 aufgeschoben werden und deckt dieses dann vollständig ab. Der Halteabschnitt 17 besitzt an seinem freien Ende eine flachringförmige Anlagefläche 18 und am entgegengesetzten Ende einen konkav gewölbten, an die Oberfläche 5 des Unterteils angepaßten Wandabschnitt 19. An den Halteabschnitt 17 schließt sich ein halbringförmiger Tragabschnitt 20 an, der den Wandabschnitt 19 zu einem Zylinderring ergänzt und dadurch eine Halterung bildet, in die z.B. ein Zahnputzbecher, ein Aschenbecher od. dgl. eingesetzt werden kann.

Das Oberteil 16 ist an seinem an die Anlagefläche 18 grenzenden, geraden Wandabschnitt jeweils mit innenliegenden Verbindungsorganen in Form von Hinterschneidungen 21 bzw. nach innen ragenden Vorsprüngen od. dgl. versehen, die mit den Hinterschneidungen 15 am Unterteil 1 zusammenwirken sollen. Außerdem weist der Halteabschnitt 17 an den Innenseiten seiner gekrümmten, kurzen Wandabschnitte jeweils ein Verbindungsorgan in Form einer Ausnehmung 22 auf, die einem der Ansätze 13 des Unterteils 1 zugeordnet ist und diesen vollständig in sich aufnehmen kann. In der zur Anlagefläche 18 senkrechten Richtung ist die Ausnehmung 22 etwas länger als der senkrecht zur Anlagefläche 2 gemessenen Länge des Ansatzes 13 entspricht. Im Bereich der kurzen Wandabschnitte ist außerdem unterhalb jeder Ausnehmung 22 je eine an die Anlagefläche 18 grenzende Ausnehmung 23 ausgebildet, die von einer Wand begrenzt wird, die in Richtung der Anlagefläche 18 als Einlaufschräge 24 ausgebildet und dazu nach außen hin abgeschrägt ist.

Damit trotz der vorstehenden Ansätze 13 des Unterteils 1 sowohl eine Montage als auch eine Demontage des Oberteils 16 möglich ist, weist das Unterteil 1, wie insbesondere Fig. 5 zeigt, in den hinter den Ansätzen 13 befindlichen Abschnitten jeweils eine nach Art eines Sacklochs ausgebildete, zur Anlagefläche 2 hin offene Aussparung 27 mit einer zur Achse der Schraublöcher 4 parallelen Achse auf. Die Aussparungen 27 besitzen einen U-förmigen Querschnitt und somit zwei durch einen Quersteg 28 verbundene Längsstege 29, die im wesentlichen parallel zu den langen, geraden Seitenflächen 14 des Unterteils verlaufen. Diese Längsstege 29 reichen bis dicht an die jeweilige Stirnfläche 12 heran, so daß dort sehr dünne, flexible Wandabschnitte 30 entstehen, die zwischen sich jeweils eine federnd am Unterteil 1 angebrachte Zunge 31 bzw. einen Wandabschnitt stehen lassen, der je einen der Ansätze 13 trägt und aufgrund der Flexibilität der dünnen Wandabschnitte 30 radial einwärts gedrückt bzw. geschwenkt werden kann. Um zu vermeiden, daß dieser Vorgang aufgrund von Materialermüdungen od. dgl. nicht ausreichend elastisch reversierbar ist bzw. die Rückstellkräfte der dünnen Häutchen bzw. Wandabschnitte 30 nicht ausreichen, ist an der Innenseite jeder Zunge 31 das eine Ende einer als Druckfeder ausgebildeten Feder 32 abgestützt, deren anderes Ende am Boden eines Abschnitts 33 der Aussparung 27 abgestützt ist. Dieser Abschnitt 33 ist im Rücken des Querstegs 28 angeordnet und erstreckt sich von der Anlagefläche 2 bis hinter den Ansatz 13 (Fig. 2 ), so daß die Feder 32 von der Seite der Anlagefläche 2 her eingesetzt, bis zum Ende des Abschnitts 33 gedrückt und dadurch richtig positioniert werden kann.

Gemäß Fig. 13 bis 16 erfolgt die Montage bzw. Demontage der anhand Fig. 1 bis 12 beschriebenen Teile auf folgende Weise.

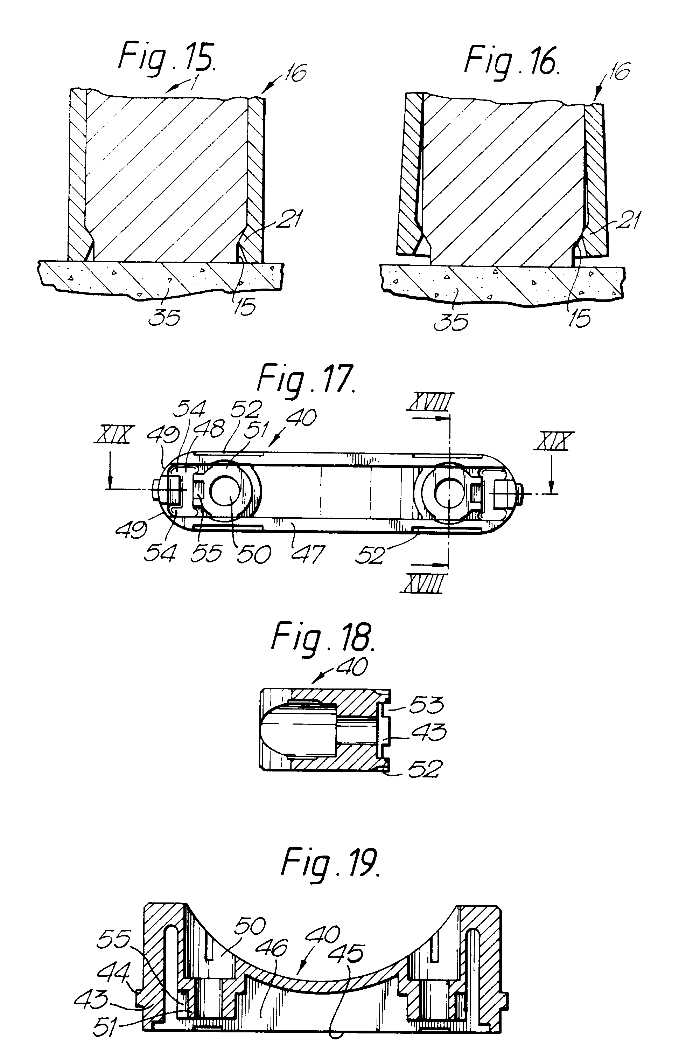

Nach dem Befestigen des Unterteils 1 an einer Wand 35 od. dgl. mit Hilfe der Befestigungsschrauben 3 werden zunächst die Stopfen 8 in die freien Enden der Schraublöcher 4 eingesetzt. Anschließend wird der kappenartige Halteabschnitt 17 des Oberteils 16 auf das Unterteil 1 aufgeschoben, wobei die Hinterschneidungen 21 auf dessen Seitenfläche 14 gleiten. Vorzugsweise sind die Hinterschneidungen und/oder der Halteabschnitt 17 aus einem flexiblen Material, z.B. Kunststoff, hergestellt, damit sie beim Aufschieben auf das Unterteil 1 entsprechend Fig. 16 nach der Seite ausweichen können.

Beim weiteren Aufschieben des Halteabschnitts 17 gleiten seine Einlaufschrägen 24 über die zugeordneten Ansätze 13 des Unterteils 1. Dies hat zur Folge, daß dessen Zungen 31 gegen die Kraft der Federn 32 nach innen in Richtung des Querstegs 28 der Aussparung 27 gedrückt werden, wobei die flexiblen Wandabschnitte 30 (Fig. 1 und 5) als Gelenke bzw. Scharniere wirken. Sobald die Ausnehmungen 22 in Höhe der Ansätze 13 angeordnet sind, federn diese mit den Zungen 31 unter dem Einfluß der elastischen Rückstellkräfte der Wandabschnitte 30 bzw. der Federn 32 radial nach außen, bis sie in die Ausnehmungen 22 ragen und daher eine Verbindung zwischen dem Unterteil 1 und dem Oberteil 16 herstellen.

Beim weiteren Aufschieben des Oberteils 16, was wegen der im Vergleich zu den Ansätzen 13 größeren Länge der Ausnehmungen 22 möglich ist, rasten schließlich die Hinterschneidungen 21 des Oberteils 16 nach Art einer Schnappverbindung hinter den komplementären Hinterschneidungen 15 des Unterteils 1 ein. Dadurch ist das Oberteil 16 gemäß Fig. 13 und 15 fest mit dem Unterteil 1 verbunden, da dieses und der Halteabschnitt 17 gleiche Querschnittsformen haben. Ein axiales Spiel des Oberteils 16 senkrecht zur Wand 35 od. dgl. wird dadurch vermieden, daß die Hinterschneidungen 15,21 derart angeordnet und ausgebildet werden, daß die Anlagefläche 18 (Fig. 7) des Oberteils 16 nach Herstellung der Schnappverbindung rundum dicht an der Wand 35 od. dgl. anliegt und zwischen beiden nur eine haarfeine Stoßfuge verbleibt.

Die Hinterschneidungen 15,21 bilden erste Verbindungsorgane, die im gefügten Zustand ein ungewolltes Abziehen des Oberteils 16 vom Unterteil 1 verhindern. Auch ein teilweises Abziehen des Oberteils 16 ist wegen des Fehlens eines axialen Spiels nicht möglich. Werden die Hinterschneidungen 21 dagegen mit Hilfe eines Werkzeugs über die Hinterschneidungen 15 weggedrückt, kann das Oberteil 16 beim Fehlen der Ansätze 13 und Ausnehmungen 22 ohne weiteres ganz vom Unterteil 1 abgezogen werden.

Die Ansätze 13 und Ausnehmungen 22 bilden zweite Verbindungsorgane, die das Oberteil 16 ebenfalls fest mit dem Unterteil 1 verbinden, beim Fehlen der ersten Verbindungsorgane oder in deren gelöstem Zustand jedoch eine begrenzte Relativverschiebung des Oberteils 16 auf dem Unterteil 1 zulassen. Die zweiten Verbindungsorgane stellen daher eine zusätzliche Sicherung gegen eine unbefugte Demontage des Oberteils 16 dar. Wird die durch die Hinterschneidungen 15,21 gebildete Schnappverbindung nämlich in Kenntnis ihrer Funktion gelöst, dann kann das Oberteil 16 dennoch nur um so viel senkrecht zur Wand 35 verschoben werden, wie dem vorgesehenen Axialspiel der Ansätze 13 in den Ausnehmungen 22 entspricht.

Bei Kenntnis des Geheimnisses kann eine befugte Demontage des Oberteils 16 dadurch erfolgen, daß zunächst mittels eines Werkzeugs die durch die ersten Verbindungsorgane (15 bzw. 21) hergestellte Verbindung gelöst und das Oberteil 16 dann um so viel, wie die Ausnehmungen 22 zulassen, in Richtung eines Pfeils v (Fig. 14 und 16) auf dem Unterteil 1 verschoben wird. Sodann wird durch einen dadurch entstehenden Spalt 36 (Fig. 14) zwischen der Anlagefläche 18 des Oberteils 16 und der Wand 35 hindurch mit je einem Werkzeug, z.B. einer Schraubenzieherklinge, gegen die unteren Enden der Zungen 31 gedrückt, um diese dadurch radial nach innen in die Aussparungen 27 zu schwenken. Hierdurch treten die Ansätze 13 aus den Ausnehmungen 22 heraus, so daß jetzt auch die zweiten Verbindungsorgane (13,22) voneinander getrennt sind und das Oberteils 16 vollends vom Unterteil 1 abgezogen werden kann.

Im Falle einer ebenen Wand 35 od. dgl. liegt die Anlagefläche 18 des Oberteils 16 überall dicht an. Außerdem weist die äußere Oberfläche des Oberteils 16 keinerlei Öffnungen, Durchbohrungen od. dgl. auf. Daher können keine Verunreinigungen wie Staub, Feuchtigkeit od. dgl. in dem vom Oberteil 16 umgrenzten Raum gelangen, so daß sich eine hygienisch einwandfreie Anordnung ergibt. Selbst wenn die Anlagefläche 18 des Oberteils bzw. die Anlagefläche 2 des Unterteils 1 nicht völlig plan an der Wand 35 od. dgl. anliegen sollte, wie dies im Bereich der Trennfugen zwischen Wandfliesen möglich wäre, ist die Gefahr der inneren Verschmutzung vergleichsweise gering, da die Schraublöcher 4 von oben durch die Stopfen 8 abgedeckt sind und Feuchtigkeit, Schmutz od. dgl. nur von unten in die Schraublöcher 4 und die Aussparungen 27 eindringen könnte.

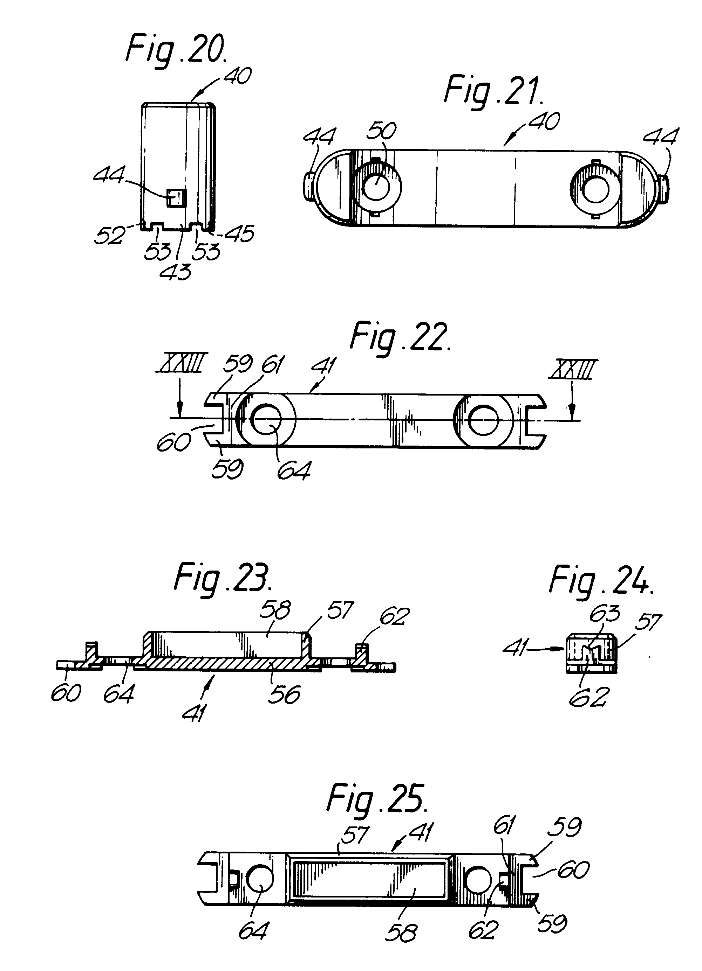

Um auch dies weitgehend zu verhindern, wird ein entsprechend Fig. 17 bis 21 abgewandeltes Unterteil 40 vorzugsweise mit einer Abdeckplatte 41 nach Fig. 22 bis 25 kombiniert. Das Unterteil 40 ist im wesentlichen entsprechend Fig. 1 bis 5 ausgebildet und weist dementsprechend bewegliche, Ansätze 44 tragende Zungen 43 auf, die den Zungen 31 entsprechen, aber einige Zehntel Millimeter, d.h. dicht oberhalb einer Anlagefläche 45 enden, damit sie auch im montierten Zustand des Unterteils 40 gut beweglich sind. Abweichend von Fig. 1 bis 5 ist das Unterteil 40 kappenartig ausgebildet, was für seine Herstellung aus Kunststoff durch Spritzguß günstiger ist, und dementsprechend mit einem Hohlraum 46 versehen, der von einer umlaufenden, an die Anlagefläche 45 grenzenden Seitenwand 47 umgeben ist, die im Bereich von den Aussparungen 27 entsprechenden U-förmigen Aussparungen 48 durch dünne Wandabschnitte 49 mit den Zungen 43 verbunden ist. Außerdem sind den Schraublöchern 4 entsprechende Schraublöcher 50 vorgesehen, die von zylindrischen, vor der Anlagefläche 45 endenden Wandabschnitten 51 umgeben sind und zur Aufnahme der Stopfen 8 dienen. Die Wandabschnitte 51 stellen gleichzeitig seitliche Begrenzungen des Hohlraums 46 dar. Außerdem sind den Hinterschneidungen 15 entsprechende Hinterschneidungen 52 (Fig. 17,18) vorgesehen, die in Fig. 20 gestrichelt angedeutet sind. Abweichend von Fig. 1 bis 5 sind schließlich auf beiden Seiten der Zungen 43 schmale, an die Anlagefläche 45 grenzende Ausschnitte 53 ausgebildet (Fig. 18,20). Die Aussparungen 48 weisen wie die Aussparungen 27 jeweils zwei Längsstege 54, einen sie verbindenden Quersteg und einen in dessen Rücken liegenden Abschnitt 55 auf.

Die Abdeckplatte 41 weist einen scheibenförmigen Grundkörper 56 auf, dessen Dicke dem Abstand zwischen der Anlagefläche 45 und den Wandabschnitten 51 des Unterteils 40 entspricht. Auf ihrer Oberseite ist die Abdeckplatte 41 mit einem umlaufenden Wandabschnitt 57 versehen, der einen Hohlraum 58 begrenzt und einen dem Innenquerschnitt des Hohlraums 46 des Unterteils 40 entsprechenden Außenquerschnitt besitzt.

An den beiden seitlichen Enden ist die Abdeckplatte 41 gabelförmig ausgebildet und mit je zwei Gabelarmen 59 versehen, zwischen denen sich jeweils eine Aussparung 60 befindet. Die Gabelarme 59 und ein sie verbindender Quersteg 61 besitzen eine im wesentlichen der Querschnittsform der Aussparungen 48 entsprechende Querschnittsform. Im Rücken des Querstegs 61 ist je ein Ansatz 62 angeordnet, der eine dem Abschnitt 55 der Aussparungen 48 entsprechende Querschnittsform besitzt und an seinem oberen Ende eine konkave Wölbung 63 aufweist. Schließlich ist die Abdeckplatte 41 mit Schraublöchern 64 versehen. Die Breite der Abdeckplatte 41 entspricht der Breite des Hohlraums 46 des Unterteils 40, während ihre Länge im wesentlichen gleich der Länge des Unterteils 40 ist.

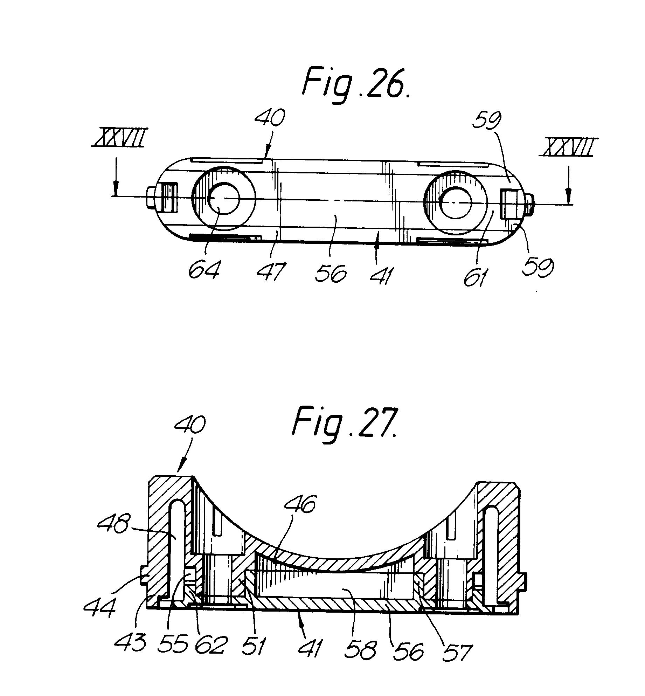

Die Abdeckplatte 41 wird gemäß Fig. 26 und 27 derart an die Unterseite des Unterteils 40 angelegt, daß ihr Wandabschnitt 57 im Hohlraum 46 zu liegen kommt und gleichzeitig seitlich an dessen Wandabschnitten 47 anliegt. Dadurch ist die Abdeckplatte 41 am Unterteil 40 zentriert. In dieser Lage schießt die Unterseite der Abdeckplatte 41 außerdem mit der Anlagefläche 45 des Unterteils 40 bündig ab, und dessen gerade Abschnitte der Seitenwände 47 liegen dicht an den entsprechend geraden Seitenrändern der Abdeckplatte 41 an. Weiterhin decken die Querstege 61 und die Gabelarme 59 die Längsstege 54 der Aussparungen 48 des Unterteils 40 völlig ab, wobei die Gabelarme 59 noch bis in die Ausschnitte 53 (Fig. 20) des Unterteils 40 ragen, während das untere Ende der Zunge 43 zwischen ihnen zu liegen kommt. Schließlich ragt jeder Ansatz 62 von unten derart in den Abschnitt 55 der zugehörigen Aussparung 48, daß seine konkave Wölbung 63 (Fig. 24) eine Begrenzung für den von der nicht dargestellten Feder 32 (Fig. 13,14) eingenommenen Raum des Abschnitts 55 bildet und die Feder 32 unverschieblich in diesem festgelegt ist. Abgesehen davon ist die Anordnung zweckmäßig so getroffen, daß die Abdeckplatte 41 mit leichtem Preßsitz in das Unterteil 40 eindrückbar ist und dieses nach der Montage zu seiner Untersiete hin bis auf schmale Stoßfugen und die koaxial auf die Schraublöcher 64 ausgerichteten Schraublöcher 50 vollkommen abgedichtet ist. In diesem Fall kann nach dem Aufschieben eines im wesentlichen den Fig. 6 bis 9 entsprechenden Oberteils 16 selbst dann kein Schmutz od. dgl. in den von diesem umhüllten Raum eindringen, wenn die Anlagefläche 45 des Unterteils 40 nicht vollkommen plan auf einer Wand od. dgl. aufliegt.

Im übrigen ist die Funktion der aus den ersten und zweiten Verbindungsorganen bestehenden Befefstigungsvorrichtung so, wie anhand der Fig. 13 bis 16 beschrieben wurde.

Die Erfindung ist nicht auf die beschriebenen Ausführungsbeispiele beschränkt, die sich auf vielfache Weise abwandeln lassen. Zunächst können das Unterteil und das Oberteil anders gestaltet und an irgendein anderes Beschlag- oder Ausstattungsteil anstatt einen Halter für einen Zahnputzbecher angepaßt sein. Dabei ist es in entsprechender Abwandlung auch möglich, ein Oberteil mit mehr als einem Unterteil zu kombinieren. Anstelle der Stopfen 8, die die Herstellung eines Unterteils mit weitgehend glatter Außenfläche ermöglichen, können andere Stopfen vorgesehen sein. Weiterhin wäre es möglich, die Aussparungen 27, 48 nicht sacklochartig, sondern durchgehend auszubilden und/oder ihre oberen und ggf. auch unteren Enden, falls erforderlich, mit weiteren Stopfen zu verschließen, sofern dadurch die Funktion der Zungen 31 bzw. 43 nicht behindert wird. Anstelle der ersten, als Hinterschneidungen 15,21 dargestellten Verbindungsorgane können auch andere Elemente, z.B. Stifte, vorgesehen sein, die in koaxiale Bohrungen der Ober- und Unterteile eingeführt werden. Auch in diesem Fall würde es nach dem Eindrücken der Stifte erforderlich sein, erst die zweiten Verbindungsorgane zu lösen, bevor das Oberteil endgültig vom Unterteil abgezogen werden kann. Ähnlich könnten die zweiten Verbindungsorgane durch Stifte realisiert werden, die z.B. in Langlöcher ragen und dadurch senkrecht zur Wand od. dgl. begrenzte Bewegungen des Oberteils auf dem Unterteil zulassen.

Weiterhin ergibt sich aus den beschriebenen Ausführungsbeispielen, daß die zweiten Verbindungsorgane (13,22 bzw. 44) auch nach dem Lösen der ersten Verbindungsorgane von außen nicht sichtbar, d.h. versteckt angeordnet sind. Auch die dünnen Wandabschnitte 30 bzw. 49 können von außen nicht bemerkt werden. Daher bietet sich Unbefugten, wenn sie das Geheimnis nicht kennen, auch nach dem teilweisen Abziehen des Oberteils vom Unterteil keinerlei Anhaltspunkt dafür, wie ein völliges Abziehen des Oberteils herbeigeführt werden könnte. Alternativ ist es allerdings auch denkbar, die Zungen 31 bzw. 43 nicht durch dünne Wandabschnitte 30 bzw. 49, sondern durch schmale, nur seitlich angebrachte Schlitze von den benachbarten Wandabschnitten zu trennen. In diesem Fall wären diese Schlitze zwar u.U. von außen sichtbar. Wenn aber die zweiten Verbindungsorgane so ausgebildet werden, daß das Oberteil nach dem Lösen der ersten Verbindungsorgane nur um wenige Millimeter bewegt werden kann, besteht auch bei einer solchen Ausführungsform keine Gefahr, daß das Geheimnis des Öffnens der Befestigungsvorrichtung zufällig herausgefunden wird. Anstelle der Zungen 31 bzw. 43 können natürlich auch andere Elemente vorgesehen sein, um die durch die zweiten Verbindungsorgane hergestellten Verbindungen zu trennen.

Die Herstellung der Unter- und Oberteile sowie der Abdeckplatten erfolgt vorzugsweise aus Kunststoff durch Spritzguß. Entsprechendes gilt für die Stopfen 8.

## Patentansprüche

1. Befestigungsvorrichtung an Beschlag- oder Ausstattungsteilen, insbesondere Ablagen, die wenigstens ein an einer Wand od. dgl. zu befestigendes, eine Anlagefläche aufweisendes Unterteil (1,40) und ein Oberteil (16) mit einem Abschnitt (17) enthalten, der auf das Unterteil (1,40) aufschiebbar ist, dieses im aufgeschobenen Zustand völlig abdeckt und einen dem Außenquerschnitt des Unterteils (1,40) entsprechenden Innenquerschnitt aufweist, mit ersten, dem vollkommen aufgeschobenen Zustand des Oberteils zugeordneten Verbindungsorganen (15,52;21), die in ihrem gefügten Zustand ein auch nur teilweises, ungewolltes Abziehen des Oberteils (16) vom Unterteil (1,40) verhindern, im getrennten Zustand dagegen ein völliges Abziehen des Oberteils (16) zulassen, dadurch gekennzeichnet, daß sie zweite Verbindungsorgane (13,44;22) aufweist, die nach Lösen der ersten Verbindungsorgane (15,52;21) in ihrem gefügten Zustand ein teilweises, in ihrem getrennten Zustand dagegen ein völliges Abziehen des Oberteils (16) vom Unterteil (1,40) ermöglichen und die ein Element (13,44) aufweisen, das im teilweise abgezogenen Zustand des Oberteils (16) zwecks Herstellung des getrennten Zustands der zweiten Verbindungsorgane (13,44;22) zugänglich ist.

2. Befestigungsvorrichtung nach Anspruch 1, dadurch gekennzeichnet, daß die zweiten Verbindungsorgane auch bei teilweise abgezogenem Oberteil (16) von außen nicht sichtbar sind.

3. Befestigungsvorrichtung nach Anspruch 1 oder 2, dadurch gekennzeichnet, daß das Element eine federnd am Unterteil angebrachte und von außen her eindrückbare Zunge (31,43) ist.

4. Befestigungsvorrichtung nach Anspruch 3, dadurch gekennzeichnet, daß die Zunge (31,43) aus einem beweglichen Wandabschnitt in einer an die Anlagefläche (2) grenzenden Wand des Unterteils (1,40) besteht und durch dünne flexible Wandabschnitte (30,49) mit dieser Wand verbunden ist.

5. Befestigungsvorrichtung nach wenigstens einem der Ansprüche 1 bis 4, dadurch gekennzeichnet, daß die ersten Verbindungsorgane aus dem Herstellen einer Schnappverbindung bestimmten, am Unter- und Oberteil (1,40;16) ausgebildeten Hinterschneidungen (15,52;21) bestehen.

6. Befestigungsvorrichtung nach wenigstens einem der Ansprüche 1 bis 5, dadurch gekennzeichnet, daß die zweiten Verbindungsorgane durch wenigstens eine an einer Innenwand des Oberteils (16) ausgebildete Ausnehmung (22) und durch wenigstens einen mit Spiel in diese ragenden, am Unterteil (1,40) vorgesehenen Ansatz (13,44) gebildet sind.

7. Befestigungsvorrichtung nach Anspruch 6, dadurch gekennzeichnet, daß der AnSatz (13,44) an der Zunge (31,43) ausgebildet ist.

8. Befestigungsvorrichtung nach wenigstens einem der Ansprüche 3 bis 7, dadurch gekennzeichnet, daß das Unterteil (1,40) wenigstens eine an die Anlagefläche (2,45) grenzende Aussparung (27,48) aufweist, die auf einer Seite von der Zunge (31,43) begrenzt ist.

9. Befestigungsvorrichtung nach Anspruch 8, dadurch gekennzeichnet, daß in der Aussparung (27,48) und zwischen der Zunge (31,43) und einem gegenüberliegenden, die Aussparung (27,48) begrenzenden Wandabschnitt eine Feder (32) abgestutzt ist.

10. Befestigungsvorrichtung nach wenigstens einem der Ansprüche 6 bis 9, dadurch gekennzeichnet, daß die Ausnehmung (22) um so viel größer als der Ansatz (13,44) ist, daß sie eine Hin- und Herbewegung des Oberteils (16) auf dem Unterteil (1,40) zwischen der vollkommen aufgeschobenen und der teilweise abgezogenen Stellung zuläßt.

11. Befestigungsvorrichtung nach wenigstens einem der Ansprüche 1 bis 10, dadurch gekennzeichnet, daß das Unterteil (40) kappenartig ausgebildet ist und einen zur Anlagefläche (45) hin offenen Hohlraum (46) aufweist und daß dem Unterteil (40) eine den Hohlraum (46) völlig abdeckende, zur bündigen Ausrichtung mit der Anlagefläche (45) bestimmte Abdeckplatte (41) zugeordnet ist.

12. Befestigungsvorrichtung nach Anspruch 11, dadurch gekennzeichnet, daß die Abdeckplatte (41) auch die Aussparungen (48) des Unterteils (40) abdeckt.

13. Befestigungsvorrichtung nach Anspruch 12, dadurch gekennzeichnet, daß die Abdeckplatte (41) an ihren Enden mit an die Querschnittsform der Aussparungen (48) angepaßten Gabelarmen (59), Querstegen (61) und Ansätzen (62) versehen ist.

## Claims

1. A fixing device for fittings or fitments, especially trays, which comprise at least one under part (1, 40) for fixing to a wall or the like and having an abutment surface, and an upper part (16) with a section (17) which can be pushed on to the under part (1, 40), covers this completely when pushed on and has an internal cross-section corresponding to the outer cross-section of the under part (1, 40), with first connecting members (15, 52; 21) associated with the completely pushed on state of the upper part and which in their coupled state prevent even partial, inadvertent withdrawal of the upper part (16) from the under part (1, 40) but in the separated state allow complete withdrawal of the upper part (16), characterized in that it comprises second connecting members (13, 44; 22) which, after releasing the first connecting members (15, 52; 21), facilitate in their coupled state a partial, but in their separated state a complete withdrawal of the upper part (16) from the under part (1, 40) and which comprise an element (13, 44) which is accessible in the partially withdrawn state of the upper part (16) for the purpose of effecting the separated state of the second connecting members (13, 44; 22).

2. A fixing device according to claim 1, characterized in that the second connecting members are not visible from the outside even with the upper part (16) partially withdrawn.

3. A fixing device according to claim 1 or 2, characterized in that the element is a spring tongue (31, 43) fitted to the under part and adapted to be pressed in from the outside.

4. A fixing device according to claim 3, characterized in that the tongue (31, 43) consists of a movable wall section in a wall of the under part (1, 40) adjoining the abutment surface (2) and is connected to this wall by thin, flexible wall sections (30, 49).

5. A fixing device according to at least one of claims 1 to 4, characterized in that the first connecting members consist of under-cuts (15, 52; 21) formed on the under and upper parts (1, 40; 16) so as to produce a snap connection.

6. A fixing device according to at least one of claims 1 to 5, characterized in that the second connecting members are formed by at least one recess (22) formed in an inner wall of the upper part (16) and by at least one projection (13, 44) provided on the under part (1, 40) and projecting with play into the recess.

7. A fixing device according to claim 6, characterized in that the projection (13, 44) is formed on the tongue (31, 43).

8. A fixing device according to at least one of claims 3 to 7, characterized in that the under part (1, 40) has at least one pocket (27, 48) adjoining the abutment surface (2, 45) and which is bounded on one side by the tongue (31, 43).

9. A fixing device according to claim 8, characterized in that a spring (32) is supported in the pocket (27, 48), between the tongue (31, 43) and an opposed wall section bounding the pocket (27, 48).

10. A fixing device according to at least one of claims 6 to 9, characterized in that the recess (22) is so much the larger than the projection (13, 44) that is allows a to and fro movement of the upper part (16) on the under part (1, 40) between the completely pushed on and partially withdrawn positions.

11. A fixing device according to at least one of claims 1 to 10, characterized in that the under part (40) is formed like a cap and has a hollow space (46) open to the abutment surface (45), and in that a cover plate (41) completely covering the hollow space (46) is associated with the under part (40), for flush alignment with the abutment surface (45).

12. A fixing device according to claim 11, characterized in that the cover plate (41) also covers the pockets (48) of the under part (40).

13. A fixing device according to claim 12, characterized in that the cover plate (41) is provided at its ends with forked arms (59), transverse webs (61) and projections (62) matched to the cross-sectional shape of the pockets (48).

## Revendications

1. Dispositif de fixation pour des pièces d'équipement, en particulier pour des tablettes, comprenant au moins un élément inférieur (1, 40) devant être fixé sur un mur ou analogue et présentant une surface d'appui, et un élément supérieur (16) avec une section (17) qui est emboîtable sur l'élément inférieur (1, 40), recouvre entièrement ledit élément inférieur à l'état emboîté et présente une section transversale intérieure correspondant à la section transversale extérieure de l'élément inférieur (1, 40), des premiers organes de raccordement (15, 52; 21) associés à l'état entièrement emboîté de l'élément supérieur et empêchant, à l'état monté, de retirer l'élément supérieur (16) de manière non intentionnelle, et même partielle, de l'élément inférieur (1, 40), lesquels organes de raccordement autorisent en revanche, à l'état séparé, un retrait complet de l'élément supérieur (16),
**caractérisé en ce** qu'il comprend des seconds organes de raccordement (13, 44; 22) qui, après le déblocage des premiers organes de raccordement (15, 52; 21) permettent de retirer, à l'état assemblé, partiellement et, à l'état séparé, complètement l'élément supérieur (16) de l'élément inférieur (1, 40), et qui comportent un élément (13, 44) lequel, à l'état de retrait partiel de l'élément supérieur (16), est accessible pour réaliser l'état séparé des seconds organes de raccordement (13, 44; 22).

2. Dispositif de fixation selon la revendication 1, caractérisé en ce que les seconds organes de raccordement sont invisibles de l'extérieur, et cela même lorsque l'élément supérieur (16) est partiellement retiré.

3. Dispositif de fixation selon l'une des revendications 1 ou 2, caractérisé en ce que l'élément est une languette (31, 43) montée de manière élastique sur l'élément inférieur et pouvant être enfoncée par l'extérieur.

4. Dispositif de fixation selon la revendication 3, caractérisé en ce que la languette (31, 43) est constituée par une section de paroi mobile dans une paroi de l'élément inférieur (1, 40) avoisinant la surface d'appui (2), et qu'elle est reliée à ladite paroi par de minces sections de paroi flexibles (30, 49).

5. Dispositif de fixation selon au moins l'une des revendications 1 à 4, caractérisé en ce que les premiers organes de raccordement sont constitués par des contredépouilles (15, 52; 21) conformées sur les éléments inférieur et supérieur (1, 40; 16) et destinées à réaliser un assemblage par encliquetage.

6. Dispositif de fixation selon au moins l'une des revendications 1 à 5, caractérise en ce que les seconds organes de raccordement sont constitués par au moins un évidement (22) ménagé dans la paroi intérieure de l'élément supérieur (16) et par au moins une saillie (13, 44) sur l'élément inférieur (1, 40) qui dépasse avec jeu dans ledit évidement.

7. Dispositif de fixation selon la revendication 6, caractérisé en ce que la saillie (13, 44) est conformée sur la languette (31, 43).

8. Dispositif de fixation selon au moins l'une des revendications 3 à 7, caractérisé en ce que l'élément inférieur (1, 40) présente au moins un évidement (27, 48) avoisinant la surface d'appui (2, 45) et délimité d'un côté par la languette (31, 43).

9. Dispositif de fixation selon la revendication 8, caractérisé en ce qu'un ressort (32) prend appui dans l'évidement (27, 48) et entre la languette (31, 43) et une section de paroi opposée qui délimite ledit évidement (27, 48).

10. Dispositif de fixation selon au moins l'une des revendications 6 à 9, caractérisé en ce que l'évidement (22) est suffisamment plus grand que la saillie (13, 44) pour permettre un mouvement alternatif de l'élément supérieur (16) sur l'élément inférieur (1, 40) entre la position d'emboîtement complet et la position de retrait partiel.

11. Dispositif de fixation selon au moins l'une des revendications 1 à 10, caractérisé en ce que l'élément inférieur (40) est conformé en capuchon et comporte une cavité (46) ouverte en direction de la surface d'appui (45), et qu'à l'élément inférieur (40) est associée une plaque de recouvrement (41) qui masque complètement la cavité (46) et sert à assurer un alignement à fleur avec la surface d'appui (45).

12. Dispositif de fixation selon la revendication 11, caractérisé en ce que la plaque de recouvrement (41) masque également les évidements (48) de l'élément inférieur (40).

13. Dispositif de fixation selon la revendication 12, caractérisé en ce que la plaque de recouvrement (41) est munie à ses extrémités de bras de fourche (59), de traverses (61) et de saillies (62) adaptés à la forme de la section transversale des évidements (48).
